**Europäisches Patentamt**

**European Patent Office**

**Office européen des brevets**

(11) Veröffentlichungsnummer: **0 416 638 A2**

# EUROPÄISCHE PATENTANMELDUNG

(21) Anmeldenummer: **90117238.7**

(22) Anmeldetag: **07.09.90**

(51) Int. Cl.⁵: **B60C 15/04**

(30) Priorität: **08.09.89 DE 3929975**

(43) Veröffentlichungstag der Anmeldung:
**13.03.91 Patentblatt 91/11**

(84) Benannte Vertragsstaaten:
**DE ES FR GB IT**

(71) Anmelder: **Continental AG**
**Königsworther Platz 1 Postfach 1 69**
**W-3000 Hannover 1(DE)**

(72) Erfinder: **Günter, Johannes, Dipl.-Ing.**
**Gerh.-Hauptmann-Strasse 16**
**W-3008 Garbsen-Frielingen(DE)**

(54) **Wulstkern für Fahrzeugluftreifen.**

(57) Die Erfindung bezieht sich auf einen Wulstkern für Fahrzeugluftreifen bestehend aus mehreren spiralig aufgespulten Lagen von nebeneinander liegenden Festigkeitsträgern. Um unter Beibehaltung der schnellen Aufwickelbarkeit die Rundlaufgenauigkeit von Fahrzeugluftreifen mit gattungsgemäßen Wulstkernen zu erhöhen, wird erfindungsgemäß vorgeschlagen, daß jede der Lagen eine größere radiale als axiale Komponente ihrer Erstreckung aufweist. Verfahren und Vorrichtung zur Herstellung solcher Wulstkerne sind ebenfalls angegeben.

FIG.1

## WULSTKERN FÜR FAHRZEUGLUFTREIFEN

Die Erfindung bezieht sich auf einen Wulstkern für Fahrzeugluftreifen bestehend aus mehreren spiralig aufgespulten Lagen von nebeneinander liegenden Festigkeitsträgern. Neben den sogenannten Kabelkernen, wo die Festigkeitsträger nach verschiedenen Mustern gegeneinander verdrillt sind, haben sich die hier in Rede stehenden gespulten Kerne wegen ihrer Preiswürdigkeit und der großen Gestaltungsfreiheit des Kernquerschnittes weitgehend durchgesetzt. Zur Herstellung dieser Kerntype wird zunächst eine endlose Lage gebildet von nebeneinander liegenden, mit Kautschuk umspritzten Festigkeitsträgern. Abgesehen von den anderen Abmessungen, insbesondere der wesentlich dichteren Stellung der Festigkeitsträger (Drähte) hat eine solche Lage eine prinzipіelle Ähnlichkeit mit einem Flachkabel aus der Elektroinstallation, wobei die Isolation das Analogon für den Kautschuk wäre. Die Anzahl der nebeneinander liegenden Festigkeitsträger einer Lage liegt je nach Reifengröße zwischen drei und neun. Aus einer solchen Lage wird ein Kern in der Weise aufgebaut, daß das Lagenende auf der Mantelfläche einer zylindrischen Spule angeheftet wird und die Lage dann bis auf mehrere Windungen aufgewickelt, abgetrennt und das Lagenende angedrückt wird. Je nach Reifengröße werden drei bis acht Windungen aufgebracht; analog dem Sprachgebrauch in der Beschreibung von Karkassen werden die einzelnen Windungen eines solchermaßen hergestellten Wulstkernes meistens als "Lagen" bezeichnet - so auch in dieser Anmeldung. Die in der beschriebenen Weise hergestelten Wulstkerne heißen in der Reifenfachsprache Pierce-Kerne.

Neben den erwähnten Vorteilen haftet den Pierce-Kernen der Nachteil an, daß der Innenradius des Wulstkernes sich am Beginn der ersten Windung unstetig um die Dicke einer Lage ändert. Diese unstetige Radiusschwankung setzt sich in einem gewissen Umfang bis in die Karkasse fort und führt zu einem systematischen Rundlauffehler. Zwar kann dieser Fehler durch einen handwerklich besonders geschickt ausgeführten Lagenumschlag auf der Reifenaufbaumaschine hinreichend klein gehalten werden, erschwert aber damit immer noch die Automatisierung des Karkassenaufbaues. Naturgemäß wird diese Fehlerquelle kleiner, wenn die Lagendicke reduziert wird und dafür die Lagenanzahl erhöht wird; der Wulstkernaufbau wird dann jedoch teurer und, wenn diese Entwicklungsrichtung bis ins Extrem beschritten wird, gegen Verwerfungen anfällig.

Aufgabe der Erfindung ist es, einen Wulstkern zu schaffen, der unter prinzipieller Beibehaltung des besonders wirtschaftlichen Aufspulens von kautschukbeschichteten Festigkeitsträgerlagen und ohne gezielte (handwerkliche) Anpassung der Länge des Karkaßlagenumschlages um den Wulstkern einen Fahrzeugluftreifen mit verbessertem Rundlauf ermöglicht.

Die Aufgabe wird erfindungsgemäß dadurch gelöst, daß jede der Lagen des Wulstkernes eine größere radiale als axiale Komponente ihrer Erstreckung aufweist.

Vorteilhafterweise liegen die Festigkeitsträgerlagen des Wulstkernes so, daß im fertig vulkanisierten und montierten Reifen diese Lagen parallel zu den Felgenhörnern liegen. Die Felgenhörner der meisten Felgen weisen nur eine geringe Konizität auf, sie erstrecken sich also im wesentlichen in radialer Richtung, während ihre Erstreckung in axialer Richtung von untergeordneter Bedeutung ist. Entsprechend der bevorzugten Parallelität zwischen Felgenhörnern und Wulstkernlagen sollen sich die Wulstkernlagen im wesentlichen in radialer Richtung erstrecken mit einer allenfalls geringen Erstreckungs-Komponente in axialer Richtung. Bei einer solchen Anordnung liegen der Spiralenanfang und das Spiralenende im wesentlichen in axialem Abstand zueinander.

Bei Schnitt durch einen erfindungsgemäßen Wulstkern erscheinen also die einzelnen Lagen nicht mehr wie im Stand der Technik als aufeinander gestapelte Gebilde, sondern als hochkant stehende, nebeneinander angeordnete Gebilde. Natürlich weisen auch die erfindungsgemäßen Wulstkerne je eine Unstetigkeitsstelle am Spiralenanfang und am Spiralenende auf, jedoch liegen diese Unstetigkeitsstellen nun im wesentlichen in der axialen Richtung versetzt und nicht mehr in der radialen Richtung und beeinflussen deshalb die im wesentlichen vom Wulstkern radial weg verlaufende Karkasse in ihrer Erstreckung praktisch nicht; aus dieser Verlagerung der aufgrund der Spultechnik unvermeidlichen Unstetigkeitsstellen an die Seiten, nämlich die axialen Seiten, des Wulstkernes, die den Fadenverlauf der Radialkarkasse am wenigsten beeinflussen, resultieren die deutlich besseren Rundlaufergebnisse auch ohne Anwendung besonderen handwerklichen Geschickes.

Auch die erfindungsgemäßen Wulstkerne enthalten vorzugsweise, wie an sich im Stand der Technik bekannt, als Festigkeitsträger Draht. Hiermit ist eine wirtschaftliche Herstellung bei günstiger Steifigkeit möglich.

Um die neuartigen Wulstkerne herzustellen, empfiehlt sich das nachfolgend beschriebene Verfahren: Zunächst werden so viele einzelne Festigkeitsträger, wie in einer -erfindungsgemäß hochkant stehenden - Lage liegen sollen, einzeln mit Kautkschuk kontinuierlich umspritzt. Jeder dieser umspritzten einzelnen Festigkeitsträger durchläuft ein separates Magazin, das in an sich bekannter Weise zur Pufferung zwischen der kontinuierlich arbeitenden Spritzanlage und der diskontinuierlich arbeitenden Kernwickelei dient. Das Kernwickeln beginnt damit, daß so viele Festigkeitsträger, wie eine (hochkant stehende) Lage enthalten soll, auf eine Wickelspule aneinanderliegend angeheftet werden, wobei die Wickelspule die Festigkeitsträger auf einer Bordscheibe aufnimmt, die nach radial innen durch einen rotationssymmetrischen Anschlag begrenzt ist, dessen Außenabmessungen der radial inneren Kontur des zu wickelnden Kernes entspricht. Nach dieser Anheftung der Festigkeitsträger wird die Wickelspule so oft gedreht, wie der zu wickelnde Kern im wesentlichen axial nebeneinanderliegende (hochkant stehende) Lagen aufweisen soll. Hierbei ist die Abzugsgeschwindigkeit der verschiedenen Festigkeitsträger aus ihren jeweiligen Magazinen unterschiedlich, weil die weiter außen liegenden Festigkeitsträger einer hochkant stehenden Lage entsprechend ihrem größeren Radius eine größere Umfangslänge erfordern. Nach vollendeter Aufwicklung werden alle Festigkeitsträger einer Lage in an sich bekannter Weise gekappt, die gekappten Enden der Festigkeitsträger angedrückt und schließlich wird der fertige Wulstkern von der Wickelspule in axialer Richtung abgezogen. Das Besondere an diesem Verfahren ist, daß die Festigkeitsträger einer Lage nicht gemeinsam sondern einzeln mit Kautschuk umspritzt werden, einzeln in separaten Magazinen gespeichert werden und erst unmittelbar vor der Wickeltrommel oder sogar erst auf der Wickeltrommel zu einer Lage zusammengesetzt werden. Durch die Vereinzelung der Festigkeitsträger einer Lage wird in besonders zuverlässiger Weise das neuartige Verfahrensproblem gelöst, daß die Festigkeitsträger einer Lage entsprechend den Unterschieden in ihrem Radius eine unterschiedliche Abzugsgeschwindigkeit aus dem der Kautschukumspritzung dienenden Extruder erfordern. Dieses Verfahrensproblem existiert bei der Herstellung der bekannten Pierce-Kerne nicht, da dort alle Festigkeitsträger einer (sich nur axial erstreckenden) Lage gegenüber der Reifenrotationsachse den gleichen Radius haben, also auch nur die gleiche Abzugsgeschwindigkeit aus dem (gemeinsamen) Extruder benötigen. Um beim Aufbau der erfindungsgemäß hochkant stehenden Lagen aus kautschukumspritzten Festigkeitsträgern Lufteinschlüsse zu vermeiden, ist es zweckmäßig, wenn die Außenkontur der Kautschukumspritzung der Festigkeitsträger die Form eines Parallelogrammes oder Quadrates aufweist, also vom üblichen kreisrunden Querschnitt abweicht. Dabei empfiehlt es sich, die vier Seiten ballig auszuführen.

Während die Wickelspulen zur Wicklung von Kernen nach dem Stand der Technik waagerecht liegende Rotationsachsen aufweisen, weist eine Wickelspule als Vorrichtung zur Durchführung des zuvor beschriebenen Verfahrens zur Herstellung erfindungsgemäßer Wulstkerne zweckmäßigerweise eine senkrecht stehende Rotationsachse auf. Mit dieser Anordnung werden unter Ausnutzung der Schwerkraft die aufgelegten Lagen gegen die Bordscheibe der Wickelscheibe gedrückt, ihre Lage also eindeutig definiert.

Die Wickelspule hat ihre einfachste geometrische Form, wenn der rotationssymmetrische Anschlag, der die Seite des zu wickelnden Wulstkernes abformt, die im fertigen Reifen nach radial innen weist, als Mantelfläche eines Zylinders ausgebildet ist. Bekanntermaßen ergibt sich ein besonders guter Reifensitz auf der Felgenschulter, wenn im Querschnitt die radial innere Schnittkante des Wulstkernes parallel zur Felgenschulter verläuft. Da die Felgenschulter bei den meisten Felgentypen zur Erhöhung der Dichtigkeit zwischen Wulst und Felge, die für schlauchlose Bereifungen von Wichtigkeit ist, leicht geneigt ist, weist der rotationssymmetrische Anschlag vorzugsweise die Form eines Stumpfes eines Spitzkegels auf mit einem Winkel zwischen der Mantelfläche und der Rotationsachse je nach dem Felgentyp, für den der Reifen gedacht ist, zwischen 5° und 20°. Diese Parallelität ist bislang nur mit solchen Wulstkernen zu erreichen, die aus einem einzigen Draht, also nicht aus Drahtlagen gewickelt sind. Diese aus einem Einzeldraht aufgespulten, vorbekannten Kerne hatten jedoch den Nachteil, daß ihr Aufwickeln sehr viel Zeit beanspruchte; beispielsweise wurde für ein Drahtpaket 6 x 6 die sechsfache Aufwickelzeit benötigt wie für den weit verbreiteten Pierce-Kern. Mit der Erfindung lassen sich felgenkonturgerechte Wulstkerne genauso schnell herstellen wie die weit verbreiteten, nicht felgenkonturgerechten Pierce-Kerne.

Nach einer Weiterbildung des vorgenannten Gedankens wird die Felgenkontur-Gerechtigkeit auch im Bereich des Felgenhornes dadurch erzielt, daß der Bordscheibenquerschnitt der Wickelspule entsprechend dem Felgenquerschnitt, für den der Reifen mit dem erfindungsgemäßen Wulstkern gedacht ist, um 80° bis 85° gegenüber der Rotationsachse geneigt ist.

Sowohl zur Erzielung der Felgenkontur-Gerechtigkeit als auch zur Erzielung einer hohen Führungsgenauigkeit und Reproduzierbarkeit der hochkant aufgewickelten Festigkeitsträgerlagen empfiehlt es sich, daß die Kehle zwischen Bordscheibe und Anschlag der Wickelspule einen Winkel gleich oder größer 100° aufweist.

Die Erfindung wird nachfolgend anhand zweier Figuren näher erläutert.

Die Figur 1 zeigt einen erfindungsgemäßen Wulstkern im perspektivischen Halbschnitt und die

Figur 2 eine Wickelscheibe als Vorrichtung zur Herstellung eines vorteilhaften Wulstkernes in der Seitenansicht.

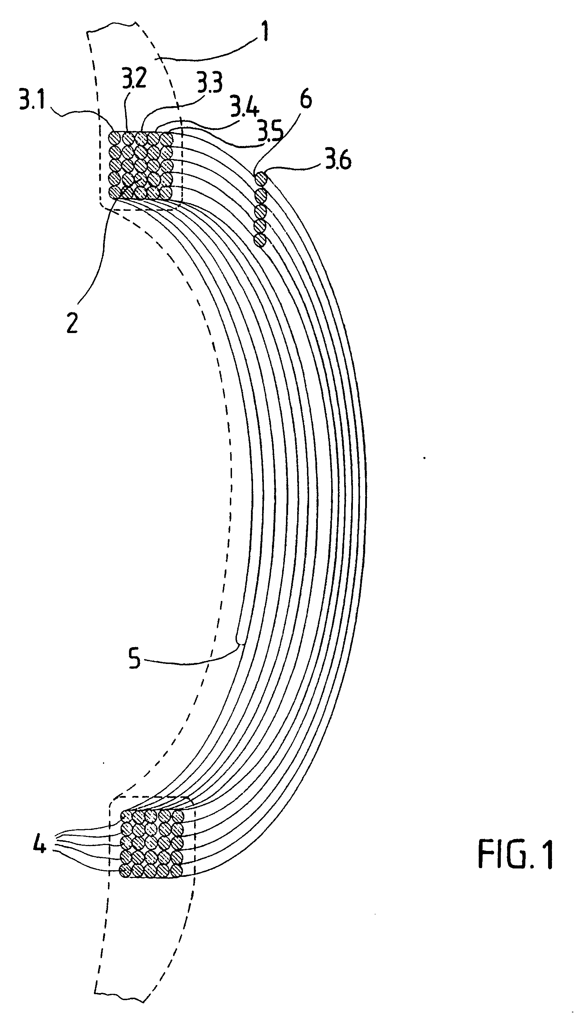

Die Figur 1 zeigt einen erfindungsgemäßen Wulstkern 2 im perspektivischen Halbschnitt. In gestrichelter Linie ist der Wulstbereich des Fahrzeugluftreifens 1 dargestellt, in den dieser Wulstkern 2 eingebaut werden soll. Der Wulstkern 2 besteht über dem größten Teil seines Umfanges aus fünf Lagen 3.1 bis 3.5; in dem kleinen Umfangsbereich, der auch als Überlappung bezeichnet wird, zwischen dem Spiralenanfang 5 und dem Spiralenende 6 weist der Kern unter Hinzuziehung der Endlage 3.6 sechs Lagen auf. Alle Lagen 3 bestehen aus fünf Drähten 4.

Wie insbesondere am gekappten Ende 6 der Lage 3.6 zu erkennen ist, weisen in diesem Ausführungsbeispiel alle Lagen 3 eine radiale Schichtung ihrer Festigkeitsträger 4 auf; in der axialen Richtung ist die Erstreckung jeder Lage lediglich gleich der Festigkeitsträger-Stärke plus Kautschukbeschichtung. Gegenüber der bekannten flachen Lagenausrichtung sind die Lagenquerschnitte nun also um 90° gedreht und stehen im wesentlichen - in diesem Ausführungsbei spiel sogar exakt - hochkant.

Da die Kautschukbeschichtung vorteilhafterweise sehr dünn ausgeführt wird - bei maßstäblicher Darstellung im Bereich der Strichstärke - ist sie in Fig. 1 der Übersichtlichkeit halber nicht dargestellt.

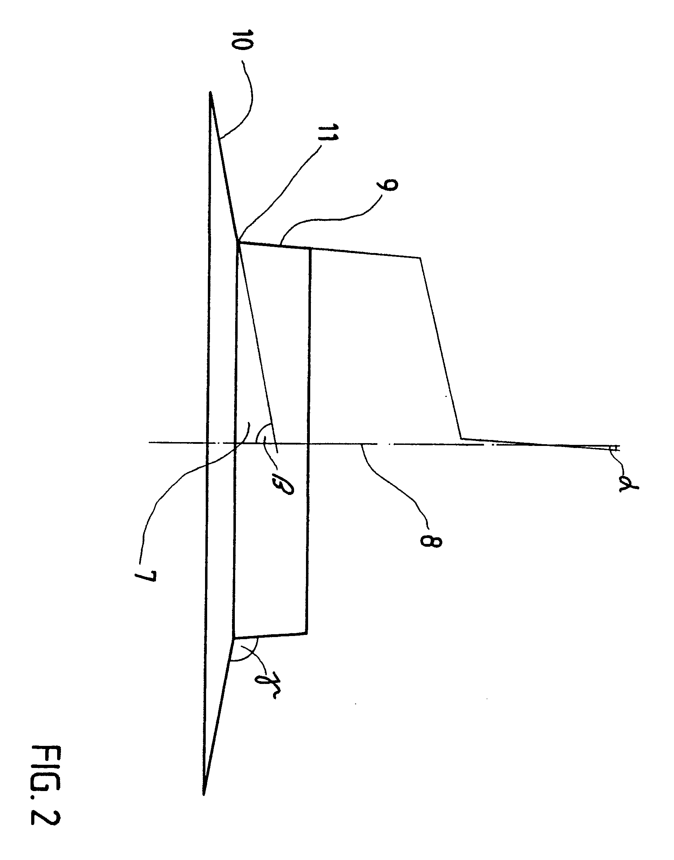

Die Fig. 2 zeigt eine Wickelspule 7 zur Herstellung erfindungsgemäßer Wulstkerne. Das Kernwickeln beginnt mit Heftung des Lagenanfanges auf die Bordscheibe 10, wobei sich die radial innerste Stelle der ersten Lage in der Kehle 11 geen die Anschlagsfläche 9 abstützt. Die Bordscheibe 10 ist in diesem Ausführungsbeispiel um 80° gegenüber der Rotationsachse 8 geneigt. Die Neigung der Anschlagsfläche 9 gegenüber der senkrecht stehenden Rotat ionsachse 8 beträgt in diesem Ausführungsbeispiel $\alpha = 5°$. Damit ergibt sich ein Kehlenwinkel $\gamma$ von 105°.

Die Erfindung ist nicht auf die dargestellten Ausführungsbei spiele beschränkt; beispielsweise lauten die Winkel für eine Kernwickelscheibe zur Herstellung eines Kernes wie in Fig. 1 dargestellt: $\alpha = 0°$, $\beta = 90°$, $\gamma = 90°$. Das Wesentliche erfindungsgemäßer Wulstkerne ist lediglich, daß ihre radial innere Seite im wesentlichen durch die schmalen Stirnseiten hochkant stehender, aufgespulter Lagen gebildet ist, so daß die Störstellen Wickelanfang (und Wickelende) von der radial inneren (bzw. radial äußeren) Seite, wo sie beim Pierce-Kern liegt (liegen), auf beide axialen Seiten der Wulstkerne verlagert ist (sind). Zwar weist der Pierce-Kern nur eine Störstel le auf für die Rundlaufgenauigkeit der Karkasse, nämlich den Wickelanfang, erfindungsgemäße Wulstkerne hingegen zwei Störstellen, nämlich Wickelanfang und Wickelende, die beide die Karkasse berühren, jedoch ist der Einfluß dieser Störstellen um Größenordnungen geringer, woraus der überlegene Rundlauf von Fahrzeugluftreifen mit erfindungsgemäßen Wulstkernen resultiert. Erfindungsgemäße Wulstkerne können sowohl bei ein- als auch mehr lagigen Karkassen angewendet werden und eignen sich besonders für die heute vorherrschenden Radialkarkassen. Der weitere Reifenaufbau erfordert im übrigen keine Änderungen.

## Ansprüche

1. Wulstkern (2) für Fahrzeugluftreifen (1) bestehend aus mehreren spiralig aufgespulten Lagen (3) von nebeneinander liegenden Festigkeitsträgern (4), **dadurch gekennzeichnet,** daß jede der Lagen (3) eine größere radiale als axiale Komponente ihrer Erstreckung aufweist.

2. Wulstkern (2) nach Anspruch 1, dadurch gekennzeichnet, daß Spiralenanfang (5) und -ende (6) im wesentlichen in axialem Abstand zueinander liegen.

3. Wulstkern (2) nach Anspruch 1, dadurch gekennzeichnet, daß die Festigkeitsträger (4) aus Draht bestehen.

4. Wulstkern (2) nach Anspruch 1, dadurch gekennzeichnet, daß die Festigkeitsträger (4) aus Kevlar (Aramidfasern) bestehen.

5. Verfahren zum Herstellen von Wulstkernen gemäß Anspruch 1, dadurch gekennzeichnet, daß zunächst so viele einzelne Festigkeitsträger, wie in einer Lage liegen sollen, einzeln mit Kautschuk kontinuierlich umspritzt werden, daß jeder dieser umspritzten einzelnen Festigkeitsträger ein separates Magazin durchläuft, das in an sich bekannter Weise zur Pufferung zwischen der kontinuierlich arbeitenden Spritzanlage und der diskontinuierlich arbeitenden Kernwickelei dient, daß zu Beginn des Kernwickelns so viele Festigkeitsträger, wie eine Lage enthalten soll, auf eine Wickelspule aneinander liegend angeheftet werden, wobei die Wickelspule die Festigkeitsträger auf einer Bordscheibe aufnimmt, die nach radial innen durch einen rotationssymmetrischen Anschlag begrenzt ist, dessen Außenabmessungen der radial inneren Kontur des zu wickelnden Kernes entspricht, daß nach anfänglicher Anheftung der Festigkeitsträger die Wickelspule so oft sich dreht, wie der zu wickelnde Kern im wesentlichen axial nebeneinander liegende Lagen aufweisen soll, wobei die Abzugsgeschwindigkeit der verschiedenen Festigkeitsträger aus ihren jeweiligen Magazinen unterschiedlich ist, daß nach vollendeter Aufwicklung alle Festigkeitsträger einer Lage in an sich bekannter Weise gekappt werden, daß die gekappten Enden der Festigkeitsträger angedrückt werden und schließlich der fertige Wulstkern von der Wickelspule axial abgezogen wird.

6. Wickelspule (7) als Vorrichtung zur Durchführung des Verfahrens gemäß Anspruch 4, dadurch gekennzeichnet, daß die Rotationsachse (8) der Wickelspule (7) senkrecht steht.

7. Wickelspule (7) als Vorrichtung zur Durchführung des Verfahrens gemäß Anspruch 4, dadurch gekennzeichnet, daß der rotationssymmetrische Anschlag (9) die Form eines Stumpfes eines Spitzkegels aufweist mit einem Winkel ($\alpha$) zwischen der Mantelfläche und der Rotationsachse zwischen 5° und 20°.

8. Wickelspule als Vorrichtung zur Durchführung des Verfahrens gemäß Anspruch 4, dadurch gekennzeichnet, daß der Bordscheiben-Querschnitt (10) um 80° bis 85° gegenüber der Rotationsachse (8) geneigt ist.

9. Wickelspule als Vorrichtung zur Durchführung des Verfahrens gemäß Anspruch 4, dadurch gekennzeichnet, daß die Kehle (11) zwischen Bordscheibe (10) und Anschlag (9) einen Winkel ($\gamma$) größer oder gleich 100° aufweist.

FIG. 1

FIG. 2